# EUROPEAN PATENT APPLICATION

(11) **EP 2 605 124 A1**
(43) Date of publication of application: **19.06.2013**
(21) Application number: 12196275.7
(22) Date of filing: 20.05.2009
(51) Int. Cl.: G06F 3/14, G09G 5/00

(54) **Visual display module with control of display data by checksum**

(62) Divisional of application: 09160775.4
(71) Applicant: Bombardier Transportation (Technology) Germany GmbH, 10785 Berlin (DE)
(72) Inventor: Mikaelsson, Marcus, 822 30 Älta (SE); Gyllenswärd, Erik, 721 73 Västerås (SE)
(74) Representative: Hansson, Anders Max

(57) **Abstract**

A visual display module displays information based on an input signal. The display module produces a graphical representation, encoded as a display drive signal, of a numerical or logical value provided by the input signal. The graphical representation is verified by a display supervisor adapted to compare checksums computed on the basis of the display drive signal with reference checksums, which are generated on the basis of the input signal. The reference checksum may be retrieved from a memory storing pairs of input signal values and reference checksums. The verification may be restricted to a sub-area of the visual display. In particular embodiments, the visual display module is further adapted to detect freezing of the screen by monitoring at least one pixel having a predefined variation.

## Description

### Technical field

The invention disclosed herein relates to visual displays for use in environments where high safety requirements apply. More precisely, it relates to a visual display module adapted to continuously verify information that it displays.

### Background

In safety-critical environments, such as the operator's cab of a public transport vehicle, conventional meter panels are sometimes preferred to electronic visual displays in order not to compromise the overall safety level of the system. Using an electronic display means introducing a new component that could, in a state of failure, mislead the operator by displaying a corrupted value. This contributes negatively to the total reliability of operation and could make the vehicle unfit for the minimum safety integrity level prescribed by administrative authorities. In the particular case of a railway vehicle, such safety-critical information to be displayed to the operator includes vehicle speed, brake pressure, engine temperature, closure status of doors and coupling status of the train set. In contrast hereto, electronic displays have been used for a long time for displaying non-safety-critical data, such as indoor climate parameters, status of lighting and other passenger conveniences.

Assume that an input signal, encoding the value of a physical quantity (measured by a sensor provided in the vehicle or read from a data register or the like), is to be presented in human-readable format on a visual display. The display is controlled during operation by a display drive signal indicating the value of each pixel of the display image. As is known to those skilled in the art, the display image perceived by the viewer is a stream of images (frames) displayed sequentially at the update frequency of the visual display. Thus, as used herein, a *display drive signal* encodes the values of all pixels in a frame by enumerating them in some predefined order, and then starts over with the pixels of the next frame. In a composite display drive signal, values of more than one pixel may be enumerated at a time. Three failure scenarios which may occur in this setting will be described by way of example.

In a first failure scenario, a software execution error or a hardware error causes 'freezing' of the display image, that is, modules responsible for producing new frames are suspended while modules adapted to maintain the latest frame are not affected by the error. A situation in which this error is particularly safety-critical is the freezing of an image provided by a live surveillance camera, which erroneously keeps indicating a 'clear to drive' condition (no passengers boarding) to a public transport vehicle driver. Likewise, a speedometer displaying an obsolete value of the speed could be a threat to safety.

In a second failure scenario, a hardware outage causes the display image to be partially misrepresented, such as by a power fault in a backlight element of a liquid-crystal display.

In a third failure scenario, an error (a runtime error, a programming error or other systematic error) occurs in the process of generating the display drive signal on the basis of the input signal. This process may imply several steps, such as converting the information encoded by the input signal to a different number format, rounding off to a desired number of digits, converting to a suitable unit of the physical quantity, typesetting the number as a bitmap text image, colouring the text image (possibly in a manner dependent on the value, to warn the operator of out-of-range values), aligning the text image and adding constant graphical elements such as frames, logotypes, notations of quantities and units etc. The generation of the display drive signal from the input signal may be further exposed to failure if it is performed by a processing means having other duties. Notably, this is the case of a touch screen or other screen equipped with input means, wherein tactile user excitations are encoded as a computer-readable output signal from the screen.

There are available 'safe' visual displays which include only such hardware that satisfies authorities' regulations regarding durability against high or low temperatures, vibrations, mechanical wear, electromagnetic fields, supply voltage transients and the like. Likewise, attempts have been made to design visual displays having an information processing chain with a low probability of failure. For instance, prior art includes testing procedures for verifying the correct functioning of a visual display - which may include checking that important control commands are executed correctly - before its commissioning and, optionally, at subsequent maintenance sessions. Possibly, testing procedures that are relatively short and do not require any user interaction can be included in an initiation cycle to be executed whenever the visual display is powered on.

As another example, there are arrangements of dual visual displays wherein each of the display drive signals is generated by a separate processing means. Because the probability that identical, non-systematic errors occur in both processing means is very limited, a failure state can be detected by comparison of the respective display images. Once a difference is detected, the information shown on both displays will be considered unreliable and appropriate actions will be taken to remove the failure state. This is despite the fact that, most probably, one of the displays is unaffected by the failure and operates properly; therefore, in fact, little benefit is obtained from the hardware redundancy in such arrangements.

As yet another example, a visual display can be monitored by a camera, wherein a comparing means is adapted to compare the actual camera image with its expected appearance. Such an arrangement, which monitors the image actually perceived by the viewer, may achieve a high level of safety but could be sensitive to false alarms caused by, e.g., vibrations of the camera relative to the display, sampling artefacts (flicker), luminosity variations and the like. Moreover, the camera for monitoring could increase hardware costs by a significant percentage and may require intricate mounting not to obscure a portion of the display or other instruments nearby.

### Summary of the invention

In view of the shortcomings of available visual displays for safe environments, it is an object of the present invention to provide a visual display with a significantly lower probability of displaying incorrect information, particularly by the third failure scenario outlined above.

Hence, in accordance with a first aspect of the invention, there is provided a visual display module comprising:
- a display adapted to display a stream of at least one image frame based on a display drive signal;
- a processing means adapted to:
   ○ receive an input signal; and
   ○ generate, based on the input signal, the display drive signal for the display;
- a checksum extractor adapted to generate, based on the display drive signal, a checksum of a supervised region of each image frame;
- a checksum predictor adapted to generate, based on the input signal, a reference checksum of said supervised region of each image frame; and
- a display supervisor adapted to verify the display drive signal by comparing the checksum with the reference checksum for each frame.

As used herein, "processing means", "checksum extractor", "checksum predictor" and "display supervisor" are functional names referring to different data processing entities, which may be physically separate units in some embodiments of the visual display module and may be combined into one or more multi-function units in other embodiments.

According to a second aspect of the invention, there is provided a method of presenting information encoded in an input signal on a visual display adapted to display a stream of at least one image frame based on a display drive signal. The method includes: generating a display drive signal for the visual display based on the input signal; generating a reference checksum of a supervised region of each frame based on the input signal; generating a checksum of the supervised region of each image frame based on the display drive signal; and verifying the display drive signal by comparing the checksum with the reference checksum for each image frame.

A visual display module according to the invention is capable of detecting a failure that causes the image frame to have a different appearance than can be expected on the basis of the input signal. As outlined in the previous section, the process of generating the display drive signal based on the input signal may include a large number of steps, each of which could introduce a new error or propagate an existing error.

As used herein, a *checksum* (also referred to as a *hash sum*) is a rank-deficient deterministic function of the digital values of a set of pixels. The values of a checksum are digital numbers having a number of bits that may or may not coincide with the word length of the computer system in which it is implemented. As is known to the skilled person, checksums may be used to detect errors introduced by data transmission, which ideally delivers an identical copy at the destination. This may be achieved by sending a first checksum in parallel to the data and checking that a second checksum, computed on the basis of the transmitted data, agrees with the first checksum. By virtue of the rank deficiency of the checksum, this process entails transmitting a total amount of data that is less than twice the information to be transmitted. As only the two checksums are compared, it moreover decreases the comparison effort.

According to the present invention, checksums are utilised to verify the correctness of a combined processing and (internal) transmission process, namely the generation and handling of the display drive signal for producing a human-readable representation of information encoded by an input signal in the form of a display image. Although such processing obviously does not produce an identical copy of the input signal, its result is yet deterministic and can be predicted once the input signal is known. It is emphasised that individual frames are verified continuously during operation of the display module, not only during a testing process or the like. The supervised region, which is invariant between consecutive frames, is the area whose associated display drive signal values are subject to verification. It is emphasised that the supervised region, as used herein, is an arbitrary collection of pixels and not limited to being a connected set. It is easy to redefine the size and/or location of the supervised region, which means that verification according to the invention can be easily adapted to different display layouts or graphical user interfaces.

As follows by the definition above, a display drive signal encodes a sequence of pixel values to be produced by the display and to form a visible image. Preferably, the display is controlled by a display drive signal consisting of time segments that represent single pixel values, which is then 'ready to use' in the sense that no more processing of the signal will take place. Therefore, the risk of a processing error causing a disagreement between the display image and the display drive signal is be very limited. The risk of processing errors causing a discrepancy between an input signal and the display drive signal is likely to be higher.

Completely passive display screens include television receivers based on cathode-ray-tube (CRT) technology, wherein control commands such as end-of-line are included directly into the display drive signal. If such screens are driven beyond their capabilities, such as by addressing non-existent pixels, the display drive signal is usually ignored and an error message is presented. The sequential nature of display drive signals have been inherited by some of the more recent display technologies, such as thin-film transistor liquid-crystal display (TFT LCD), in which the colour point of individual pixels may be controlled by means of transistor switches associated with the respective pixels. Common TFT LCDs sample the display drive signal digitally, thereby emulating the movement of the electron beam in a CRT display, and forward each sample to the relevant transistor switch. The sampling and forwarding structures are synchronised by the display drive signal but are otherwise independent of the information encoded therein. Thanks to common protection circuitry similar to that of CRT displays, a failure in such structures leads to a state equivalent to a bus error (out-of-range addressing) which puts the entire LCD out of operation. Thus, the inventors have realised that the risk of corrupted information appearing on the screen *for the reasons discussed in this paragraph* is limited and can be mastered through design of a display module by selecting display hardware classified in accordance with an appropriate safety standard and even by including redundant hardware, such as two independent backlight controllers. Likewise, it is assumed that input signals to the visual display module have been transmitted over duly verified trusted channels.

The display module according to the invention represents an advantage over available display modules for at least the following reasons:
- It presents information encoded in the input signal on the screen with a high safety integrity level.
- The use of checksums limits the quantity of data that needs to be handled for the sole purpose of checking.
- The amount of redundant hardware necessitated by safety measures, notably additional internal bandwidth for transmitting checksums and reference checksums, is limited and efficiently used.
- The function structure of display module is such that the amount of trusted software (in accordance with relevant industry standards) is small and can be limited to sections that are not susceptible of frequent updates.

In a preferred embodiment of the invention, the display drive signal is transmitted from the processing means to the display by low-voltage differential signalling (LVDS) or transition-minimised differential signalling (TMDS), which allows high transmission rates while generating little electromagnetic interference. A parallel bus, or other means for parallel single-ended signalling, may be used as an alternative.

In an advantageous embodiment of the invention, the reference checksum is retrieved from a memory storing pre-calculated checksums on the basis of the numerical or logical value to be presented in the supervised region, as encoded by the input signal. This increases the computational efficiency of the visual display module, because the checksum and reference checksum are anyway determined on the basis of the supervised region only; in order to derive the reference checksum, there is no reason to generate a display drive signal for a complete image frame, including regions presenting other measurement values or containing fixed graphical elements. The use of pre-calculated checksums also reduces hardware expenses and energy consumption, since displays usually require a predefined least display drive signal power that is higher than the internal signal power used in the processing means.

If it is found that the checksum differs from the reference checksum, appropriate protection actions should be taken. In a preferred embodiment, the display supervisor is adapted to cause the processing means to stop receiving the input signal, which notifies surrounding units of a malfunction of the display. As an alternative or further addition, the display supervisor could interrupt the generation of the display drive signal, (partially) blank the display or power it off, so that no unverified information is displayed to the user.

The input signal typically encodes a plurality of values to be presented on the display. An embodiment suitable for this situation features several supervised regions on the display, such as one for each value, each of which is verified using a checksum to be compared with a reference checksum. If this embodiment further includes retrieving the reference checksums from a memory in which pre-calculated checksums are stored, less memory space will be required. Then, the total number of stored items is the sum, not the product, of the number of values the various quantities can assume. As an alternative hereto, each character in a textual representation of a value can be contained in a separate supervised region. The number of pre-calculated checksums can then be as low as the number of available characters in the font.

In an advantageous embodiment of the invention, the image frames comprise a fixed region having a predetermined variation with respect to the succession of frames. By monitoring that the actual variation agrees with the predetermined one, it is possible to detect a 'frozen screen' condition, similarly to the first failure scenario above. The monitoring is preferably performed by the display supervisor on the basis of the display drive signal. The monitoring can also be performed by a human user; then, preferably, the region could be a pulsating textual separator (such as ":") in a digital clock or a moving graphic seconds hand in a clock dial. The monitoring can also be automatically effected by a photosensitive component adapted to receive light from a fixed region of the display surface. The fixed region may alternate between two colour points at some predetermined frequency. Preferably, as not to disturb the visual attention, such alternating region is an edge segment of the display surface that is hidden from the user by the mounting frame or a projecting light guide partially covering the display surface.

In particular embodiments of the invention, the visual display module further includes a system supervisor, which is communicatively coupled to the display, the processing means, the checksum extractor, the checksum predictor and the display supervisor. The system supervisor is responsible for surveillance of several safety-critical parameters and controls the power supply to each of the other units. Moreover, it stores an indication of the cause for the latest restart of the visual display module and/or the number of restarts; this information may be used in deciding whether new restart attempts should be made.

Another embodiment features an overlay means for inserting a video stream encoded by a video stream input signal. The overlay means is adapted to combine the display drive signal and the video stream input signal into an overlaid display drive signal, which encodes a stream of one or more display frames in which the video stream is displayed in an inset. For the purpose of verifying authenticity of the video stream, the video stream input signal may be watermarked by including one or more pixels having a predetermined value. The display supervisor is then adapted to monitor these pixels and verify that they have the predetermined value. Further, to detect a frozen image condition such watermark pixels may have a nominal cyclic succession of values. If the display supervisor establishes that the value of one or more watermark pixels has been constant longer than expected, it can be concluded that the stream of video frames is likely to have been interrupted or there is a refresh error.

In a preferred embodiment of the invention, the checksum extractor is adapted to not only to receive the display drive signal (such as by being connected in parallel to the display) but to generate a modified display drive signal and forward this to the display in place of the display drive signal. If the verification is not active or has detected an error, then a warning to the user can be included as an overlay text in the display drive signal.

The various embodiments outlined above may be regarded as independent contributions to increase the safety and/or the efficiency of the visual display module according to the invention. In no case do two such contributions conflict mutually, and features from two or more of the disclosed embodiments can be combined to advantage.

### Brief description of the drawings

The invention will now be further elucidated with reference to the accompanying drawings, on which:
figure 1 is a schematic drawing of a visual display module in accordance with an simple embodiment of the invention;
figure 2 is a schematic drawing of a visual display module in accordance with another embodiment of the invention;
figure 3 shows an alternative embodiment, further including a system supervisor, to that shown in figure 2;
figure 4 is a detailed view of a portion of the visual display module shown in figure 1 together with values of the signals;
figure 5 shows a sample of a bitmap font;
figure 6 shows a representation of a numerical value using the font of figure 5;
figure 7 shows a composite display image;
figure 8 shows contents of a look-up table storing pre-calculated checksums;
figure 9 shows a further alternative embodiment, including an overlay functionality, to that shown in figure 2.

### Detailed description of embodiments

Particular embodiments of the present invention will now be described. The invention may, however, be embodied in many different forms and should not be construed as being limited to the embodiments set forth herein; rather, these embodiments are provided by way of example so that this disclosure will be thorough and complete, and will fully convey the scope of the invention to those skilled in the art.

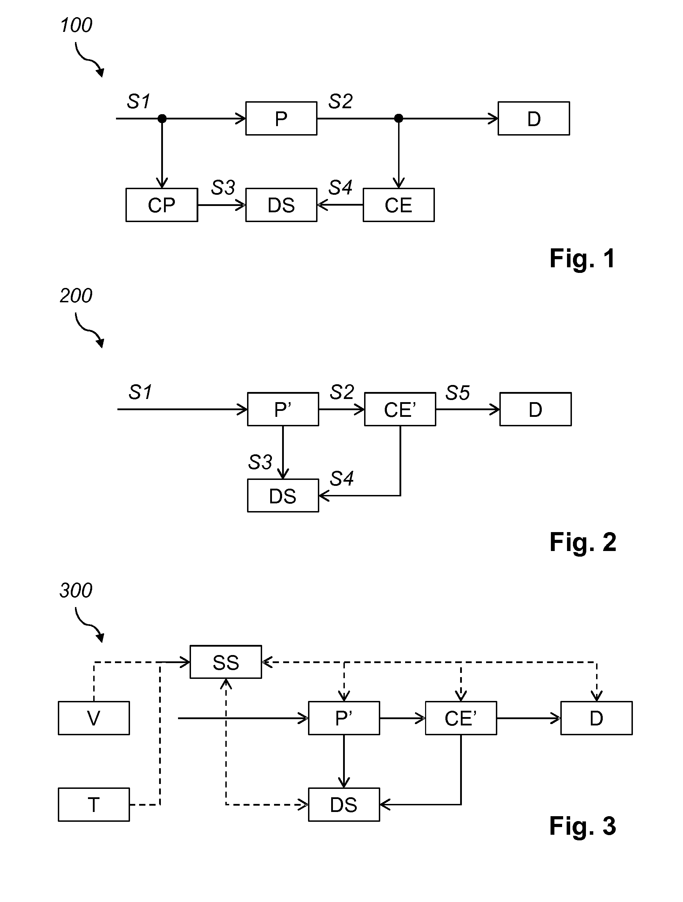

Figure 1 schematically shows a visual display module (human-machine interface) 100 according to the invention. An input signal S1 is fed to both a processing means P and a checksum predictor CP. On the basis of the input signal S1, the processing means P is adapted to generate a display drive signal S2 to be provided to a display D. The signal S2, which may be transmitted by LVDS, TMDS, parallel or other suitable signalling, encodes a stream of pixel values and can be used without further processing. The input signal S1 is also used by the checksum predictor CP to generate a reference checksum S3 of a supervised area of the display frames. In order to verify the accuracy of the display drive signal S2, a checksum S4 generated by a checksum extractor CE on the basis of the display drive signal S2 is compared with the reference checksum S3 by a display supervisor DS. Any difference between the reference checksum S3 and the checksum S4 that the display supervisor DS detects generates an error signal (not shown) which triggers suitable safety measures, such as activation of a visual or audible signal to the driver or interruption of receipt of the input signal S1. The display supervisor DS may have a broader set of responsibilities, such as watchdog-type supervision of the software execution in the processing means P, thereby acting as a general safety processor. The units involved in computing checksums and validating these execute trusted software in accordance with the safety standard (see, e.g., EN 50128 in the particular case of railway applications) of the visual display module 100. An advantage of the layout shown in figure 1 is that the processing means P does not have to be safety certified. This facilitates subsequent software updates and also implies a greater latitude in choosing a software supplier for graphics libraries and the like. Additionally, it limits the amount of software code that needs to be produced in accordance with industry standards for software safety.

Figure 2 schematically depicts a visual display module 200 according to another embodiment of the invention. The set of units therein differs with respect to the module 100 of figure 1 in so far as the processing means P' is adapted to perform the tasks of both the processing means P and the checksum predictor CP in figure 1: based on an input signal S1, the processing means P' generates a display drive signal S2 and a reference checksum S3. For preserving a high safety integrity level, it is preferable that the processing means generates the reference checksum S3 as early as possible after receipt of the input signal S1. If one or more processing steps are common to the first processing chain (from the input signal S1 to the display drive signal S2) and the second processing chain (from the input signal S1 to the reference checksum S3), then the accuracy of these steps cannot be verified by the comparison of checksums according to the invention. The layout of the visual display module 200 further differs in so far as a checksum extractor CE' is interposed between the processing means P' and the display D. The checksum extractor receives the display drive signal S2 and produces both a checksum S4 based on the display drive signal S2 and a modified display drive signal S5. The modified display drive signal S5 may be equal to the display drive signal S2 at all times. In a preferred embodiment, however, the checksum extractor CE' is adapted to generate an overlay indicative of whether the safety verification is active. For instance, if the checksum generation has not yet been initiated, a warning overlay (such as a text segment "Safety functions not enabled" covering a portion of the display image) may be added to alert the user. As in the embodiment shown in figure 1, a display supervisor continuously compares the checksum S4 and the reference checksum S3 to verify the display drive signal.

Some particularities relating to both of embodiments shown in figures 1 and 2 will now be further elucidated. Firstly, the general character of a display drive signal was briefly discussed in the *Background* section. Some examples of display drive signal formats used in industry are VGA, SVGA, XGA, SXGA, UXGA, which may be provided to the display D over a single-ended parallel transmission line. Digital formats can also be provided by LVDS or TMDS signalling. The hardware components may be any kind of microprocessors, and one physical hardware unit may be responsible for two or more processing tasks. However, to ensure the desired safety integrity level, the unit(s) for generating the display drive signal should be separated from the units engaged in verifying the display drive signal, in order to decrease the risk of an error being overlooked due to a hardware failure affecting both operations. It is noted that a the checksum extractor is preferably a field-programmable gate array, an application-specific integrated circuit, a system-on-a-chip or the like. As one skilled in the art realises, it may be beneficial to include a frame buffer in the processing means. This will allow the generation of the display drive signal to take place at a rate that may differs momentarily from the rate at which the display is adapted to receive the display drive signal. To support such non-synchronous processing, it may be suitable to define a sliding time window in which discrepancies are tolerated. As an alternative to this, time stamping or frame number stamping may be applied.

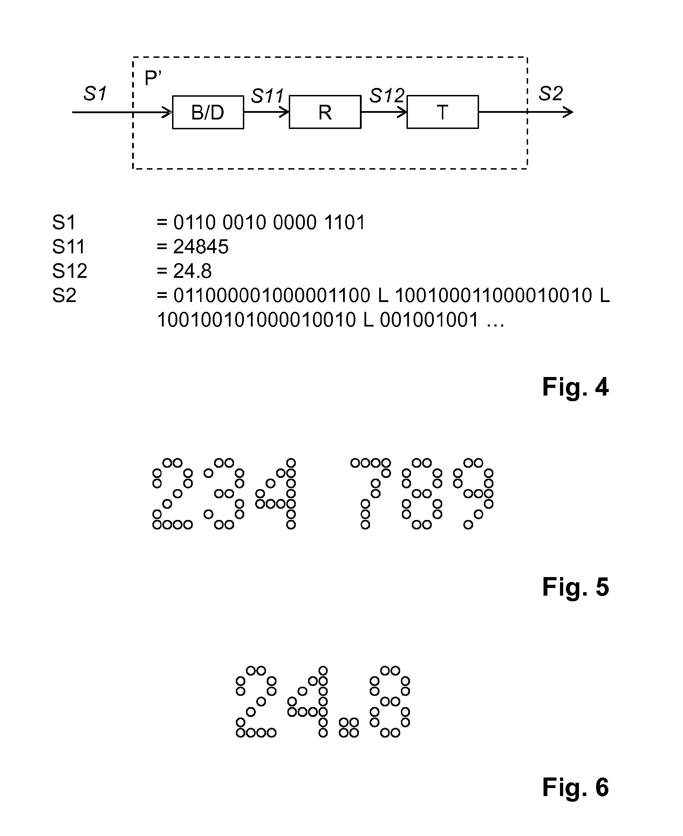

Secondly, the generation of the display drive signal will be discussed with reference to figures 4-7. Figure 4 shows a portion of the visual display module 200 of figure 2, namely the processing means P' with its subunits, and further indicates the values of signals annotated in the figure. In other embodiments, the set of subunits of the processing means P' may be different. In the example shown, the input signal S1 is a binary representation of an integer number representative of the speed of a vehicle in metres per hour. A binary-to-digital converter B/D converts this number to decimal form, as encoded by signal S11. A rescaling section R converts this number into the desired unit, kilometres per hour, and rounds it off to one decimal place. This number is encoded by signal S12. A typesetting unit T uses a font to produce a pixel representation of the number. Signals S1, S11 and S12 may be transmitted by parallel buses, as may signal S2 on its way towards the checksum extractor CE'.

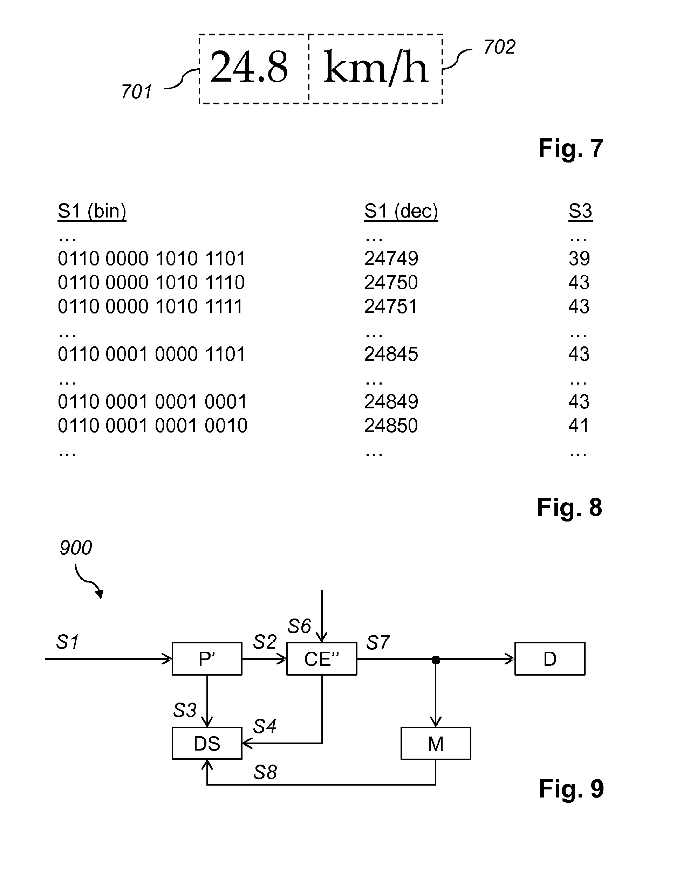

Figure 5 shows sample characters of an exemplary font of the bitmap type. Clearly, the figures occupy a space of 4x7 pixels each, the separator occupies 3×7 pixels and all are separated by a space of 1×7 pixels. A representation of the number 24.8 as a pattern of 18x7 pixels is shown in figure 6. A corresponding monochrome display drive signal S2, enumerating the pixels line by line, from left to right, is shown in figure 4. Here, the character "L" represents a line break. Alternatively, as shown in figure 7, the typesetting unit T concatenates a variable pixel block 701 representing the number and a guiding pixel block 702, which in the present case defines the unit of the number in human-readable format. Suitably, because the guiding pixel block 702 is not generated dynamically, the supervised area is only the variable pixel block 701. Further alternatively, the processing means P' comprises units adapted to perform one or more of the following steps:
- non-linear unit conversion, such as between miles per gallon and litres per 100 kilometres, which are both units for measuring fuel efficiency of vehicles;
- generation of textual representations of logical values encoded by the input signal, such as by decoding a numerical error code as plain text in a selected language;
- generation of a pixel representation of a numerical or logical value by using a vector-coded font which is rasterised;
- generation of a graphical pixel representation of a numerical value, e.g., as an image of an analogue pointer instrument indicating this value or a function plot showing the time evolution;
- further formatting, such as colouring, possibly in dependence of the actual value of the input signal or another input signal (e.g., the speed limit), to alert the user of out-of-range values;
- conversion between various video formats (in terms of resolution, colour coding, refresh rate etc.) to suit the display;
- combination of pixel blocks representing values of different quantities values or guiding information; and
- combination of other pixel blocks with a periodically varying pixel block, to enable detection (either by a human user or by an automatic detection means, as described above) of a possible condition of suspended updating of the display.

As the skilled person realises, the numerical or logical data encoded by the input signal may undergo further similar steps before the display drive signal is generated. Any such step is a potential error source.

In any embodiment of the invention, the display may be equipped with input means, such as actuator buttons, IR sensors, touch controls or a touch-sensitive surface covering the display (touch screen), enabling the user to enter information and software control commands by touching specified areas of a graphical user interface shown on the display or actuator buttons indicated by such interface. This is known as an intuitive interface for human-computer interaction. The generation of control signals - which is effected on the basis of mechanical excitation - however adds to the computational burden on the visual display module and increases the risk of a faulty display drive signal. The continuous verification of the display drive signal, through comparison of the checksums, then is all the more important.

Thirdly, an exemplary way of generating the checksum in connection with a monochrome display drive signal will be described. A simple checksum may consist of the sum of the pixel values, the value 1 referring to an active pixel and 0 to an inactive pixel. The checksum for the pixel pattern disclosed in figure 6, representing the number 24.8, will then be equal to 43. Because the digit 8 includes 4 pixels more than the digit 7 and 2 pixels more than the digit 9, it can be concluded that a pixel pattern representing 24.7 (using the font of figures 5 and 6) is 39 and a pattern representing 24.9 is 41. In other embodiments of the invention, the display D is a colour display wherein each pixel is encoded as a colour number associated, through a predefined palette, with a colour point. To illustrate, each colour in the 24-bit red-green-blue (RGB) palette is characterised by a 24-bit binary number. Accordingly, the checksum may then be the sum of the colour numbers. Although the generation of the checksums described above should not be very cumbersome, it can be further alleviated by summing only the last bits of the colour number or by summing the colour numbers *modulo* a fixed integer. The IEEE 802.3 networking standard discloses several checksums, notably CRC-32, which are suitable for use in connection with the present invention. Error-correcting checksums may also be used in embodiments of the invention.

Fourthly, the generation of the reference checksum is advantageously effected by retrieval from a memory storing pre-calculated checksums. This is possible because the pixel representation of a numerical or logical value encoded by the input signal is always created in the same manner. Figure 8 shows the content of a look-up table storing checksums. The first and second columns refer to values of the input signal S1, in binary and decimal form respectively, and the third column refers to the corresponding (reference) checksum S3.

A particularly efficient method of gathering the contents of a look-up table similar to that shown in figure 8 is by operating the visual display module according to the invention in a dedicated, administrator-assisted learning mode: during display of a still image frame having been verified by an administrator the checksum extractor computes a checksum for each of the supervised regions. A plurality of still image frames are required for going through the entire set of input single values. This procedure could either be performed by a human administrator or automatically, by imaging the display using some kind of camera device.

Figure 3 shows a visual display module 300 in accordance with a more comprehensive embodiment of the present invention. In addition to the components of the previously described module 200, it comprises a system supervisor SS, which is communicatively connected to the other components and adapted to coordinate their powering and resetting. The system supervisor SS is also responsible for restarting the visual display module 300 as a whole, for keeping track of the cause of the latest restart, the cause of the latest shutdown and of the total number of restarts since the latest shutdown. In this illustrative embodiment, the system supervisor SS is further adapted to monitor a thermometer T adapted to indicate whether the temperature of the visual display module 300 is in the nominal range and take action if it is not; notably, a heater may be activated if the temperature is found to be too low. The system supervisor SS may further supervise the voltage source V to check the actual supply voltage provided to the module 300; if it is not sufficiently high at initialisation, the system supervisor SS may suspend powering of other units temporarily. Moreover, the system supervisor SS may be adapted to receive and monitor heartbeat/watchdog signals from other units in the module 300, so that early warnings of malfunction can be obtained. Optionally, the sections involved in the display drive signal generation can be tested at startup by causing the display to show a predetermined test image, for which a reference checksum has been computed and stored in the visual display module 300 and for which a checksum is extracted from the actual display drive signal. The system supervisor SS may then suspend further operation of the module 300 if a discrepancy of the checksums is detected.

In an alternative embodiment of the invention, the display supervisor, the system supervisor or both are adapted to supervise further signals, from which an indication of a possible safety threat may be derived. Such further signals may include:
- a temperature of the display;
- a driving current provided to a component of the display, such as the backlight source;
- a total driving current provided to the display;
- a total frame count, which should increase steadily;
- a line synchronisation signal; and
- control signals to the backlight controllers of the display.

For each of the above quantities, it is verified repeatedly that the actual value is in the normal range. For instance, a significant drop in the driving current to the display could indicate that one of the backlight sources is faulty. If however such a drop is accompanied by a change in the control signal to one of the backlight controllers, it may be considered normal.

Figure 9 schematically shows a visual display module 900, wherein a checksum and overlay unit CE" is adapted, on the one hand, to generate a checksum S4 based on the display drive signal S2 and, on the other, to produce an overlaid display drive signal S7 on the basis of a video stream signal S6. The video stream - e.g., a live camera image or a fixed graphical element such as the pixel block 702 in figure 7 - may be shown in an inset of the display image. The checksum and overlay unit CE" may be required to convert the video stream signal between different formats, such as from an analogue video format to digital RGB. (In alternative embodiments, the task of overlaying the video stream can be carried out by the processing unit P' if the video stream signal is provided in an appropriate format.) In order to verify the authenticity of the overlaid display drive signal S7, the source of the video stream is adapted to assign a fixed value (for verifying the signal source) or a cyclically variable value (for additionally verifying the updating of the image) to one or more pixels (watermark pixels) in the inset. Preferably, the watermark pixels are invisible or hardly visible to a human eye. In this embodiment, the display supervisor monitors these pixels via a masked display drive signal S8, which is produced by means of a signal mask M on the basis of the overlaid display drive signal S7. If the value of the watermark pixel(s) is found to deviate from the expected value above a threshold, then an error may have occurred.

While the invention has been illustrated and described in detail in the drawings and foregoing description, such illustration and description are to be considered illustrative or exemplary and not restrictive; the invention is not limited to the disclosed embodiments. For example, the checksums can be computed in a variety of ways and the visual display module can be partitioned into functional sections in a multitude of ways.

Other variations to the disclosed embodiments can be understood and effected by those skilled in the art in practicing the claimed invention, from a study of the drawings, the disclosure, and the appended claims. In the claims, the word 'comprising' does not exclude other elements or steps, and the indefinite article 'a' or 'an' does not exclude a plurality. A single processor or other unit may fulfil the functions of several items received in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

### EMBODIMENTS

1. A visual display module (100) comprising:
   a display (D) adapted to display a stream of at least one image frame based on a display drive signal;
   a processing means (P) adapted to:
      receive an input signal (S1); and
      generate, based on the input signal, a display drive signal (S2) for the display;
   a checksum extractor (CE) adapted to generate, based on the display drive signal, a checksum (S4) of a supervised region of an image frame;
   a checksum predictor (CP) adapted to generate, based on the input signal, a reference checksum (S3) of said supervised region of the image frame; and
   a display supervisor (DS) adapted to verify the display drive signal by comparing the checksum with the reference checksum for the image frame.
2. A visual display module according to item 1, wherein the display drive signal includes a stream of pixel values.
3. A visual display module according to item 2, wherein the display is adapted to display image frames based on the stream of pixel values in the display drive signal without further processing.
4. A visual display module according to any one of the preceding items; wherein the display drive signal is transmitted from the processing means to the display by one of:
   low-voltage differential signalling, LVDS;
   transition-minimised differential signalling, TMDS; and
   parallel single-ended signalling.
5. A visual display module according to any one of the preceding items, wherein the checksum predictor is adapted to:
   extract, from the input signal, a numerical value to be presented in said supervised region; and
   retrieve the corresponding reference checksum from a memory storing pre-calculated checksums.
6. A visual display module according to any one of the preceding items, wherein the display supervisor is further adapted to cause the processing means to interrupt receipt of the input signal.
7. A visual display module according to any one of the preceding items, wherein:
   the checksum extractor is adapted to generate a checksum of pixel values in each of a plurality of supervised regions of the frame; and
   the checksum predictor is adapted to generate a reference checksum for each of said supervised regions.
8. A visual display module according to any one of the preceding items, wherein each image frame comprises at least one region having a predetermined periodic variation with respect to consecutive frames.
9. A visual display module according to item 8, wherein the display supervisor is further adapted to receive the display drive signal and monitor said at least one region having a predetermined periodic variation.
10. A visual display module according to any one of the preceding items, further comprising a system supervisor (SS), which is communicatively coupled to the display, the processing means, the checksum extractor, the checksum predictor and the display supervisor, and which is adapted to perform at least one of:
   surveillance of a temperature of the visual display module;
   surveillance of a voltage supply;
   storage of the cause for the latest restart;
   storage of the number of restarts since the latest power on; and
   reception and monitoring of a heartbeat signal of at least one other unit in the visual display module.
11. A visual display module according to any one of the preceding items, wherein the checksum extractor is further adapted to generate a modified display drive signal (S5), which is based on the display drive signal (S2) and includes an overlay indicating whether verification of the display drive signal is enabled.
12. A visual display module according to any one of the preceding items, further comprising an overlay means for generating an overlaid display drive signal on the basis of a video stream input signal and the display drive signal generated by the processing means, the overlaid display drive signal encoding a stream of at least one display frame having an inset for displaying the video stream, wherein the display supervisor is further adapted to monitor at least one watermark pixel in the inset having a predetermined value.
13. A method of presenting information encoded in an input signal on a visual display adapted to display a stream of at least one image frame based on a display drive signal, the method including the steps of:
   based on the input signal, generating a display drive signal for the visual display;
   based on the input signal, generating a reference checksum of a supervised region of each image frame;
   based on the display drive signal, generating a checksum of said supervised region of each image frame; and
   verifying the display drive signal by comparing the checksum with the reference checksum for each image frame.

## Claims

1. An arrangement for verifying a display drive signal (S2), which is to be provided to a display (D) adapted to display a stream of at least one image frame based on the display drive signal,
wherein a processing means (P) is adapted to receive an input signal (S1) and generate, based on the input signal, the display drive signal for the display,
the arrangement comprising:
a checksum extractor (CE) adapted to generate, based on the display drive signal, a checksum (S4) of a supervised region of an image frame;
a checksum predictor (CP) adapted to generate, based on the input signal, a reference checksum (S3) of said supervised region of the image frame; and
a display supervisor (DS) adapted to verify the display drive signal by comparing the checksum with the reference checksum for the image frame

2. The arrangement according to claim 1, wherein the display drive signal which includes a stream of pixel values.

3. The arrangement according to claim 2, wherein the display is adapted to display image frames based on the stream of pixel values in the display drive signal without further processing.

4. The arrangement according to any one of the preceding claims, wherein the display drive signal is transmitted from the processing means to the display by one of:
low-voltage differential signalling, LVDS;
transition-minimised differential signalling, TMDS; and
parallel single-ended signalling.

5. The arrangement according to any one of the preceding claims, wherein the checksum predictor is adapted to:
extract, from the input signal, a numerical value to be presented in said supervised region; and
retrieve the corresponding reference checksum from a memory storing pre-calculated checksums.

6. The arrangement according to any one of the preceding claims, wherein the display supervisor is further adapted to cause the processing means to interrupt receipt of the input signal.

7. The arrangement according to any one of the preceding claims, wherein:
the checksum extractor is adapted to generate a checksum of pixel values in each of a plurality of supervised regions of the frame; and
the checksum predictor is adapted to generate a reference checksum for each of said supervised regions.

8. The arrangement according to any one of the preceding claims, wherein each image frame comprises at least one region having a predetermined periodic variation with respect to consecutive frames.

9. The arrangement according to claim 8, wherein the display supervisor is further adapted to receive the display drive signal and monitor said at least one region having a predetermined periodic variation.

10. The arrangement according to any one of the preceding claims, further comprising a system supervisor (SS), which is communicatively coupled to the display, the processing means, the checksum extractor, the checksum predictor and the display supervisor, and which is adapted to perform at least one of:
surveillance of a temperature of the visual display module;
surveillance of a voltage supply;
storage of the cause for the latest restart;
storage of the number of restarts since the latest power on; and
reception and monitoring of a heartbeat signal of at least one other unit in the visual display module.

11. The arrangement according to any one of the preceding claims, wherein the checksum extractor is further adapted to generate a modified display drive signal (S5), which is based on the display drive signal (S2) and includes an overlay indicating whether verification of the display drive signal is enabled.

12. The arrangement according to any one of the preceding claims, further comprising an overlay means for generating an overlaid display drive signal on the basis of a video stream input signal and the display drive signal generated by the processing means, the overlaid display drive signal encoding a stream of at least one display frame having an inset for displaying the video stream, wherein the display supervisor is further adapted to monitor at least one watermark pixel in the inset having a predetermined value.

13. A visual display module (100), comprising:
a display (D) adapted to display a stream of at least one image frame based on a display drive signal;
a processing means (P) adapted to receive an input signal (S1) and generate, based on the input signal, a display drive signal (S2) for the display; and
the arrangement according to any one of the preceding claims, wherein the checksum extractor of the arrangement receives the display drive signal and the checksum predictor of the arrangement receives the input signal.

14. A method of presenting information encoded in an input signal on a visual display adapted to display a stream of at least one image frame based on a display drive signal, the method including the steps of:
based on the input signal, generating a display drive signal for the visual display;
based on the input signal, generating a reference checksum of a supervised region of each image frame;
based on the display drive signal, generating a checksum of said supervised region of each image frame; and
verifying the display drive signal by comparing the checksum with the reference checksum for each image frame.
